# EUROPÄISCHE PATENTSCHRIFT

(11) **EP 4 372 510 B1**
(45) Veröffentlichungstag und Bekanntmachung des Hinweises auf die Patenterteilung: **01.01.2025**
(21) Anmeldenummer: 22208127.5
(22) Anmeldetag: 17.11.2022
(51) Int. Cl.: G05D 1/644, G05D 105/10, G05D 107/40, G05D 109/10, G05D 111/30

(54) **ARBEITSGERÄT UND VERFAHREN ZUM BETRIEB EINES ARBEITSGERÄTS**
WORK DEVICE AND METHOD FOR OPERATING A WORK DEVICE
OUTIL DE TRAVAIL ET PROCÉDÉ DE FONCTIONNEMENT D'UN OUTIL DE TRAVAIL

(43) Veröffentlichungstag der Anmeldung: 22.05.2024
(73) Patentinhaber: Vorwerk & Co. Interholding GmbH, 42270 Wuppertal (DE)
(72) Erfinder: Ortmann, Roman, 47057 Duisburg (DE)
(74) Vertreter: Dr. Solf & Zapf Patent- und Rechtsanwalts PartG mbB

(56) Entgegenhaltungen:
- EP-A1- 3 570 133
- CN-A- 105 466 421
- US-A1- 2019 043 251
- US-A1- 2019 331 501

## Beschreibung

Die Erfindung betrifft ein Arbeitsgerät, insbesondere ein Reinigungsgerät zum autonomen Reinigen einer Bearbeitungsumgebung, gemäß dem Oberbegriff des Anspruchs 1.

US 2019/0043251 A1 offenbart als autonome Drohnen ausgebildete Arbeitsgeräte. Diese sind derart ausgebildet, dass sie sich zwischen zumindest zwei verschiedenen Orten bewegen können, wobei sie sich während der Bewegung zwischen zwei Orten in verschiedene Kommunikationszonen hinein- und wieder herausbewegen können. Dabei ist vorgesehen, dass die Drohnen, während sie sich in einem Gebiet mit begrenzter oder keiner Signalabdeckung befinden, die Daten für eine spätere Übertragung speichern und erst dann übertragen, sobald die autonomen Drohnen wieder in ein Gebiet mit ausreichender Funksignalabdeckung eintreten.

Aus US 2019/0331501 A1 ist ein autonomes Arbeitsgerät bekannt. Dieses Arbeitsgerät ist dazu ausgebildet, in Bearbeitungsumgebungen eingesetzt zu werden, die mindestens ein Funknetz aufweisen, das in allen Bereichen der Bearbeitungsumgebung eine ausreichende Signalstärke für eine Datenverbindung aufweist. Dabei ist das Arbeitsgerät derart ausgebildet ist, dass es sich, wenn es die Bearbeitungsumgebung mit der für die Datenverbindung ausreichenden Signalstärke verlässt, selbstständig, basierend auf einer gespeicherten Karte oder der zurückgelegten Route, wieder in die Bearbeitungsumgebung mit der ausreichenden Signalstärke für die Datenverbindung bewegt.

Aus EP 3 570 133 A1 ist ein weiteres Arbeitsgerät bekannt, welches insbesondere zumindest zwei verschiedene Orte basierend auf einer geplanten Route anfährt. Dieses Arbeitsgerät weist einen Qualitätscontroller auf, der einen stetigen Abgleich der Signalqualität der Bearbeitungsumgebung durchführt. Weiterhin weist das Arbeitsgerät einen Routencontroller auf, der die schnellstmögliche Route analysiert. In einem Bewegungscontroller des Arbeitsgerätes wird basierend auf den Signalen des Qualitätscontrollers und des Routencontrollers eine Route generiert, die Bereiche mit schlechter Kommunikationsqualität meidet, so dass dem Arbeitsgerät während der Bewegung zwischen zwei Orten stets eine, für eine Datenübertragung ausreichende, Signalstärke zur Verfügung steht.

Arbeitsgeräte sind im Stand der Technik in einer Vielzahl von Ausgestaltungen bekannt. Derartige Arbeitsgeräte sind dazu ausgebildet, sich in einer Bearbeitungsumgebung autonom fortzubewegen und Arbeitsaufgaben zu erledigen. Ein Beispiel für solche Arbeitsgeräte sind Reinigungsgeräte, die in einer Bearbeitungsumgebung Reinigungsaufgaben erledigen, Transportroboter in der Lagerlogistik oder Sicherheitsroboter, die zu Überwachungszwecken eingesetzt werden. Ein Reinigungsgerät ist beispielsweise als Saugroboter, Wischroboter oder Saug- und Wischroboter ausgebildet.

Üblicherweise verfügen derartige Arbeitsgeräte über mindestens eine Steuereinrichtung, die eine Datenverarbeitungseinrichtung umfasst, und die mit einer Mehrzahl von Sensoren eine Navigation des Arbeitsgerätes in der Bearbeitungsumgebung gewährleistet sowie das Erledigen von Arbeitsaufgaben in der Bearbeitungsumgebung steuert.

An Arbeitsgeräte, die als Reinigungsgeräte ausgebildet sind, und die für gewerbliche Anwendungen geeignet sind, werden hohe Anforderungen an einen möglichst autonomen Betrieb und minimierte Benutzerinteraktion gestellt. Bei der Verwendung derartiger Arbeitsgeräte ist vorgesehen, dass diese über drahtlose Funkverbindungen Daten empfangen oder versenden, beispielsweise um Zustandsdaten an einen Benutzer zu übertragen oder um Arbeitsanweisungen zu erhalten. Durch die Möglichkeit der Datenübertragung kann ein Benutzer z. B. die Durchführung von Arbeitsaufgaben durch das Arbeitsgerät und den Zustand des Arbeitsgeräts aus der Ferne überwachen und erforderlichenfalls steuernd eingreifen.

Ferner können mittels übertragener Daten die Arbeitsaufgaben modifiziert oder angepasste Zeitpläne an das Arbeitsgerät übermittelt werden. Zudem können erforderliche Updates von einer Software des Arbeitsgeräts über die Datenverbindung eingespielt werden.

Aus dem Stand der Technik bekannte Arbeitsgeräte stellen bereits ein hohes Maß an Autonomie bereit, allerdings besteht stets eine Anforderung dahingehend, insbesondere ein Tätigwerden eines Benutzers im Rahmen des Betriebs des Arbeitsgeräts auf ein Minimum zu reduzieren.

Der Erfindung liegt daher die Aufgabe zugrunde, ein Arbeitsgerät, insbesondere für gewerbliche Anwendungen, anzugeben, das einen möglichst autonomen Betrieb mit geringer Benutzerinteraktion ermöglicht.

Die vorgenannte Aufgabe wird bei einem gattungsgemäßen Arbeitsgerät durch die Merkmale des Anspruchs 1 gelöst, wobei das Arbeitsgerät ferner dazu ausgebildet und eingerichtet ist, unter Verwendung mindestens eines Schwellenwerts bezüglich der Signaleigenschaft mindestens einen für eine Datenübertragung über das Funknetz geeigneten Ort in der Bearbeitungsumgebung zu ermitteln. Ferner ist das Arbeitsgerät dazu ausgebildet und eingerichtet, zur Durchführung von Arbeitsaufgaben in Bearbeitungsumgebungen eingesetzt zu werden, in welchen das Funknetz nicht in allen Bereichen der Bearbeitungsumgebung eine ausreichende Signalstärke für eine Datenverbindung aufweist,

Alternativ oder zusätzlich dazu ist vorgesehen, die Signalpositionsdaten an der Funkschnittstelle zur Ermittlung mindestens eines geeigneten Ortes in der Bearbeitungsumgebung, der für eine Datenübertragung geeignet ist, bereitzustellen und Daten zu mindestens einem ermittelten Ort an der Funkschnittstelle zu empfangen. Das Ermitteln mindestens eines Ortes in der Bearbeitungsumgebung, der für die Datenübertragung geeignet ist, erfolgt insbesondere durch mindestens eine Datenverarbeitungseinrichtung, z. B. einen mit dem Funknetz zumindest mittelbar verbundenen Server oder ein mobiles Endgerät eines Benutzers, insbesondere ein Smartphone, ein Tablet oder ein Notebook, unter Verwendung mindestens eines Schwellenwerts in Bezug auf die mindestens eine Signaleigenschaft.

Bei dem Ort bzw. den Orten, der bzw. die für eine Datenübertragung geeignet sind, handelt es sich beispielsweise um eine bestimmte Position in der Bearbeitungsumgebung oder um einen Bereich in der Bearbeitungsumgebung, in dem mindestens eine Signaleigenschaft des Funknetzes einen vorbestimmten Schwellenwert erreicht, also beispielsweise eine Signalstärke oberhalb eines vorbestimmten Schwellenwertes liegt.

Das Arbeitsgerät ist zur autonomen Fortbewegung in einer Bearbeitungsumgebung und zur Erledigung von Arbeitsaufgaben ausgebildet. Beispielsweise ist das Arbeitsgerät als Reinigungsgerät, Transportgerät in der Transportlogistik oder Sicherheitsroboter zur Umgebungsüberwachung ausgebildet.

Vorzugsweise ist das Arbeitsgerät als Reinigungsgerät zum Reinigen einer Bearbeitungsumgebung ausgebildet. Bei dem als Reinigungsgerät ausgebildeten Arbeitsgerät handelt es sich vorteilhaft um ein Reinigungsgerät mit Saug- und/oder Wischfunktion, insbesondere um einen Saugroboter, einen Wischroboter oder einen Saug- und Wischroboter. Das Arbeitsgerät weist vorteilhaft mindestens ein Gehäuse mit daran angeordneten Antriebsrädern auf, um eine Fortbewegung zu ermöglichen. Das Arbeitsgerät verfügt insbesondere über mindestens eine Steuereinrichtung, die das autonome Bewegen und Reinigen einer Bearbeitungsumgebung durch das Reinigungsgerät steuert. Insbesondere weist das Arbeitsgerät mindestens ein Umgebungssensorsystem mit einer Mehrzahl von Sensoren auf, mittels derer insbesondere die Bearbeitungsumgebung betreffende Daten erfassbar sind, um eine Navigation in der Bearbeitungsumgebung zu ermöglichen. Die Steuereinrichtung weist vorzugsweise mindestens eine Datenverarbeitungseinrichtung mit mindestens einem Prozessor und mindestens einem Speicher auf.

Die Funkschnittstelle des Arbeitsgeräts zur Datenübertragung ist zum Empfangen und zum Senden von Daten über mindestens ein Funknetz ausgebildet. Der Empfang von Daten ist beispielsweise unter anderem für die Navigation erforderlich, um insbesondere aktualisierte Navigationsdaten, z. B. Karten, zu erhalten, oder für den Betrieb, beispielsweise um Arbeitsanweisungen oder Arbeitspläne zu empfangen. Das Versenden von Daten ist z. B. erforderlich, um Zustandsdaten zum Arbeitsgerät oder Positionsdaten zu versenden. Derartige Funknetze haben in einer Bearbeitungsumgebung üblicherweise keine homogene Netzabdeckung, da bauliche Gegebenheiten und Umgebungseinflüsse das Funknetz beeinflussen. Es können in einer Bearbeitungsumgebung daher Orte, insbesondere Bereiche, vorhanden sein, an denen eine schlechte oder keine Abdeckung durch das Funknetz vorhanden ist. Durch die inhomogene Netzabdeckung kann der Datenaustausch mit dem Arbeitsgerät gestört sein oder unmöglich werden.

Eine Kenntnis über die Netzabdeckung mindestens eines für die Datenübertragung vorgesehenen Funknetzes in der Bearbeitungsumgebung ist daher für den Betrieb des Arbeitsgeräts vorteilhaft. Um Kenntnis über eine Netzabdeckung mindestens eines Funknetzes oder verschiedener Funknetze in der Bearbeitungsumgebung zu erlangen, ist das Arbeitsgerät dazu ausgebildet und eingerichtet, mindestens eine Signaleigenschaft mindestens eines für die Datenübertragung geeigneten Funknetzes an unterschiedlichen Orten in der Bearbeitungsumgebung zu erfassen und durch Verknüpfung mit den jeweiligen Positionsdaten Signalpositionsdaten zu erzeugen.

Bei einer Bewegung durch die Bearbeitungsumgebung wird beispielsweise in vordefinierten Zeitintervallen jeweils mindestens eine Signaleigenschaft mindestens eines Funknetzes oder mindestens eine Signaleigenschaft von jeweils einer Mehrzahl von Funknetzen erfasst und mit dem Ort der Erfassung verknüpft. Derartige Signalpositionsdaten lassen sich beispielsweise grafisch aufbereitet in einer Kartendarstellung anzeigen.

Vorzugsweise ist vorgesehen, dass die Signaleigenschaften einer Mehrzahl von Funknetzen an unterschiedlichen Orten in der Bearbeitungsumgebung erfasst und mit Positionsdaten zu Signalpositionsdaten verknüpft werden. Daraus kann beispielsweise für jedes Funknetz eine grafische Darstellung der jeweiligen Netzabdeckung in der Bearbeitungsumgebung abgeleitet werden bzw. für jedes Funknetz funknetzspezifische Orte ermittelt werden, die für eine Datenübertragung in dem jeweiligen Funknetz vorteilhaft geeignet sind. So können beispielsweise für eine Übertragung über ein WLAN-Netz andere Orte geeignet sein als für ein Mobilfunknetz.

Als Signaleigenschaft wird beispielsweise eine Signalstärke, insbesondere ein Leistungspegel, z. B. in dB, eine Signaldämpfung, eine Frequenz, eine Datenübertragungsrate und/oder eine Übertragungstechnologie erfasst. Es ist insbesondere auch vorgesehen, dass eine Mehrzahl der vorgenannten Signaleigenschaften erfasst wird.

Beispielsweise handelt es sich bei dem Funknetz um ein WLAN-, Bluetooth-, ZigBee-, Z-Wave-, EnOcean- oder ein Mobilfunknetz, z. B. 2G, 3G, 4G, 5G. Prinzipiell sind alle für eine Datenübertragung geeigneten Übertragungsprotokolle bzw. Frequenzen für ein derartiges Funknetz geeignet.

Bevorzugt ist vorgesehen, dass das Arbeitsgerät zur Durchführung einer Kartierungsfahrt in der Bearbeitungsumgebung ausgebildet und eingerichtet ist. Die Kartierungsfahrt dient der Erfassung der Bearbeitungsumgebung, insbesondere bei einem erstmaligen Einsatz des Arbeitsgeräts in der Bearbeitungsumgebung. Im Rahmen einer Kartierungsfahrt werden insbesondere keine Arbeitsaufhaben erledigt, sondern die Kartierungsfahrt dient insbesondere dem Erfassen von Daten über die Bearbeitungsumgebung, die eine Navigation innerhalb der Bearbeitungsumgebung für ein autonomes Fortbewegen zur Erledigung von Arbeitsaufgaben ermöglichen. Das Erfassen der Daten erfolgt beispielsweise mit einem Umgebungssensorsystem. Das Durchführen einer Kartierungsfahrt wird beispielsweise durch einen Benutzer mittels einer über die Funkschnittstelle, beispielsweise von einem mobilen Endgerät, übermittelten Anweisung veranlasst oder mittels Eingabe am Arbeitsgerät, beispielsweise mittels einer speziell dafür vorgesehenen Taste, veranlasst. Insbesondere ist das Arbeitsgerät vor Durchführung der Kartierungsfahrt derart eingerichtet worden, dass über die Funkschnittstelle eine Verbindung zu mindestens einem Funknetz in der Bearbeitungsumgebung, z. B. Mobilfunk oder WLAN, hergestellt werden kann.

Das Arbeitsgerät ist insbesondere ferner dazu ausgebildet und eingerichtet, während einer Kartierungsfahrt an einer Vielzahl von Orten mindestens eine Signaleigenschaft mindestens eines Funknetzes, beispielsweise eine Signalstärke, z. B. einen Leistungspegel in dB, des Funknetzes, zu erfassen und mit der jeweiligen Position in der Bearbeitungsumgebung zu Signalpositionsdaten zusammenzuführen. Die Signalpositionsdaten werden beispielsweise in einem Speicher der Steuereinrichtung abgelegt.

Das Arbeitsgerät ist ferner dazu ausgebildet und eingerichtet ist, unter Verwendung mindestens eines Schwellenwertes bezüglich der Signaleigenschaft mindestens einen für eine Datenübertragung über das Funknetz geeigneten Ort in der Bearbeitungsumgebung zu ermitteln. Die Signalpositionsdaten werden folglich vorteilhaft dazu verwendet, anhand mindestens eines vorbestimmten Kriteriums mindestens einen Ort in der Bearbeitungsumgebung zu ermitteln, der für eine Datenübertragung über mindestens ein Funknetz geeignet ist. Beispielsweise ermittelt das Arbeitsgerät auf Basis eines Schwellenwertes für die Signalstärke und/oder die Signaldämpfung und/oder einer Datenübertragungsrate mindestens einen oder mehrere Orte in der Bearbeitungsumgebung, die für eine Datenübertragung geeignet sind, weil dort eine Datenübertragung aufgrund einer guten Netzabdeckung vorteilhaft möglich ist. Diese Orte bzw. Daten zu diesen Orten werden vorzugsweise in einem Speicher abgelegt, um im Betrieb des Arbeitsgerätes darauf zurückgreifen zu können. Es ist insbesondere auch vorgesehen, die Daten zu diesen Orten an der Funkschnittstelle, beispielsweise zur Übertragung über das Funknetz an eine Datenverarbeitungseinrichtung, bereitzustellen.

Alternativ oder zusätzlich dazu ist vorgesehen, die Signalpositionsdaten zur Ermittlung mindestens eines für eine Datenübertragung über das Funknetz geeigneten Ortes in der Bearbeitungsumgebung unter Verwendung mindestens eines Schwellenwertes bezüglich der Signaleigenschaft durch eine Datenverarbeitungseinrichtung an der Funkschnittstelle bereitzustellen. Bei der Datenverarbeitungseinrichtung handelt es sich beispielsweise um einen über das Funknetz erreichbaren Server oder ein mobiles Endgerät eines Benutzers, beispielsweise ein Smartphone, Tablet oder Laptop. Es ist vorgesehen, dass das Funknetz mit dem Internet verbunden ist, um Daten auf eine räumlich entfernte Datenverarbeitungseinrichtung zu übertragen. Auf Basis der Signalpositionsdaten wird durch die Datenverarbeitungseinrichtung mindestens ein für die Datenübertragung geeigneter Ort in der Bearbeitungsumgebung bestimmt und an das Arbeitsgerät übermittelt, so dass das Arbeitsgerät an der Funkschnittstelle Daten zu mindestens einem ermittelten Ort empfängt bzw. empfangen kann.

Vorzugsweise ist das Arbeitsgerät dazu ausgebildet und eingerichtet, sich nach Abschluss einer Kartierungsfahrt an einen zur Datenübertragung geeigneten Ort in der Bearbeitungsumgebung zu bewegen, um von dort die ermittelten Signalpositionsdaten über die Funkschnittstelle an mindestens eine Datenverarbeitungseinrichtung zu übermitteln.

Die von dem Arbeitsgerät ermittelten Signalpositionsdaten werden folglich zur Bestimmung von für die Datenübertragung geeigneten Orten verwendet bzw. zur Ermittlung bereitstellt. Die Kenntnis des oder der für eine Datenübertragung geeignetes Ortes bzw. Orte ist für den Betrieb des Arbeitsgeräts von Bedeutung, da sich mit einer Steigerung der Zuverlässigkeit der Datenübertragung von und zu dem Arbeitsgerät die Autonomie steigern und erforderliche Benutzerinteraktionen mit dem Arbeitsgerät reduzieren lassen. Wenn beispielsweise eine Datenübertragung von und zu dem Arbeitsgerät bevorzugt nur an dafür geeigneten Orten durchgeführt wird, werden Fehler und Unterbrechungen bei der Datenübertragung vermieden. Insbesondere bei der Übertragung von großen Datenmengen oder von für den Betrieb des Arbeitsgeräts erforderlichen Daten, z. B. eines Firmware-Updates, ist eine stabile Datenverbindung von besonderer Bedeutung. Dadurch, dass dem Arbeitsgerät Daten über Orte vorliegen, an denen eine Datenübertragung zu mindestens einem Funknetz möglich ist, kann das Arbeitsgerät vorteilhaft auch in Bearbeitungsumgebungen eingesetzt werden, die mindestens ein Funknetz aufweisen, das nicht in allen Bereichen der Bearbeitungsumgebung eine ausreichende Signalstärke für eine Datenverbindung aufweist.

Die Kenntnis über die Orte, an denen eine vorteilhafte Datenübertragung erfolgen kann, lässt sich gemäß einer ersten Ausgestaltung des Arbeitsgerätes vorteilhaft nutzen. Das Arbeitsgerät ist ferner dazu ausgebildet und eingerichtet, sich zur Durchführung einer Datenübertragung über die Funkschnittstelle, beispielsweise an eine über das Funknetz erreichbare Datenverarbeitungseinrichtung, an mindestens einen zur Datenübertragung geeigneten Ort in der Bearbeitungsumgebung zu bewegen. Vorzugsweise handelt es sich dabei um ein gesondertes Anfahren des Ortes, das nicht im Zusammenhang mit einer Bewegung zur Erledigung einer Arbeitsaufgabe in der Bearbeitungsumgebung steht. Insbesondere in Bearbeitungsumgebungen, in denen eine schlechte Abdeckung des Funknetzes vorliegt und insbesondere beispielsweise die Basisstation des Arbeitsgerätes in einem nicht durch das Funknetz abgedeckten Bereich liegt, ist es vorteilhaft, wenn das Arbeitsgerät sich beispielsweise in vorbestimmten Zeitintervallen, beispielsweise einmal im Monat oder einmal in der Woche, an einen Ort in der Bearbeitungsumgebung bewegt, der zur Datenübertragung geeignet ist, um beispielsweise Firmware-Updates durchzuführen, Kartendaten zu empfangen oder Anwenderanweisungen zu erhalten.

Bei den Daten, die zur Übertragung, also den Empfang und/das Senden, über die Funkschnittstelle vorgesehen sind, handelt es sich beispielsweise um Mess-, Umgebungs- oder Betriebsdaten des Arbeitsgerätes. Die Daten werden über das Funknetz beispielsweise an eine räumlich entfernt angeordnete Datenverarbeitungseinrichtung, beispielsweise einen Server, übermittelt, um dort weiterverarbeitet oder gespeichert zu werden. Ferner ist insbesondere vorgesehen, dass das Arbeitsgerät bei der Datenübertragung über die Funkschnittstelle Daten von einer Datenverarbeitungseinrichtung erhält, beispielsweise ein Firmware-Update, Kartendaten, Informationen über weitere Arbeitsgeräte in der Bearbeitungsumgebung, Informationen zu einer Basisstation für das Arbeitsgerät, Einsatzdaten zur Durchführung von Arbeitsaufgaben in der Bearbeitungsumgebung oder andere Anweisungen von einem Benutzer. Ferner ist vorgesehen, dass bei der Datenübertragung Daten an einen Hersteller des Arbeitsgerätes übermittelt werden oder das Arbeitsgerät Daten von einem Hersteller erhält, beispielsweise Serviceleistungen oder Funktionsänderungen.

Alternativ oder zusätzlich ist vorgesehen, dass das Arbeitsgerät dazu ausgebildet und eingerichtet ist, sich im Verlaufe einer Bewegung zur Erledigung von Arbeitsaufgaben in der Bearbeitungsumgebung zu einem für eine Datenübertragung geeigneten Ort in der Bearbeitungsumgebung zu begeben, um dort eine, insbesondere geplante, Datenübertragung durchzuführen, also Daten zu empfangen oder Daten zu senden.

Erfindungsgemäß wird die Autonomie des Arbeitsgeräts dadurch gesteigert, dass das Arbeitsgerät ferner dazu ausgebildet und eingerichtet ist, sich bei Auftreten eines vorbestimmten Ereignisses, beispielsweise bei Nichtauffinden einer Basisstation, einem Defekt, einer Fehlfunktion oder einem Regenerationsbedarf eines Arbeitswerkzeugs o.ä., und/oder zum Übertragen - Senden oder Empfangen - von Daten mit einer Größe, die einen vorbestimmten Schwellenwert überschreitet und/oder zeitgesteuert an einen zur Datenübertragung geeigneten Ort zu bewegen. Dies ist insbesondere dann vorteilhaft, wenn eine Basisstation des Arbeitsgerätes an einem Ort aufgestellt ist, in dem keine oder nur eine eingeschränkte Datenübertragung über das Funknetz möglich ist.

Wenn von dem Arbeitsgerät eine Fehlfunktion oder ein Defekt erkannt worden ist, besteht bei aus dem Stand der Technik bekannten Arbeitsgeräten das Risiko, dass diese beispielsweise in einem Fehlermodus in einem Bereich stehenbleiben, in dem keine Datenübertragung über ein Funknetz möglich ist. Der Benutzer muss dann tätig werden und das Arbeitsgerät zur Fehlerbehebung zunächst in der Bearbeitungsumgebung suchen, wodurch der Aufwand für einen Benutzer, insbesondere bei großen oder komplexen Bearbeitungsumgebungen, gesteigert ist. Der erfindungsgemäße Vorteil besteht darin, dass das Arbeitsgerät eine Datenübertragung, beispielsweise von Daten über die Art des Fehlers und seine Position, dadurch sicherstellt, dass es sich an einen bekannten Ort begibt, der für die Datenübertragung geeignet ist. Das Suchen des Arbeitsgeräts durch einen Benutzer entfällt dadurch.

Vorteilhaft ist ferner vorgesehen, dass das Arbeitsgerät dazu ausgebildet und eingerichtet ist, für eine Übertragung an der Funkschnittstelle vorgesehene Daten, also insbesondere Daten, die über das Funknetz übermittelt werden sollen, so lange bereitzuhalten, bis bei einer Bewegung in der Bearbeitungsumgebung zur Erledigung von Arbeitsaufgaben ein für eine Datenübertragung geeigneter Ort, insbesondere Bereich, in der Bearbeitungsumgebung erreicht ist, so dass, wenn beispielsweise ein Schwellenwert einer aktuell gemessenen Signaleigenschaft erreicht wird, die Datenübertragung an dem Ort, insbesondere in dem Bereich, gestartet wird. Dadurch wird sichergestellt, dass die Übertragung der Daten überhaupt erfolgen kann.

Gemäß einer weiteren Ausgestaltung des Arbeitsgerätes hat sich als besonders vorteilhaft herausgestellt, wenn vorgesehen ist, dass das Arbeitsgerät ferner dazu ausgebildet und eingerichtet ist, an einem Ort, der für eine Datenübertragung geeignet ist, insbesondere ohne Bewegung, zu verweilen, bis eine Datenübertragung abgeschlossen ist. Alternativ oder zusätzlich dazu ist vorgesehen, dass das Arbeitsgerät bei Erreichen des Ortes, insbesondere eines Bereiches, für eine Datenübertragung eine Bewegung an dem Ort verlangsamt, um eine Datenübertragung zu gewährleisten. Es ist ferner vorgesehen, dass sich das Arbeitsgerät in einem bestimmten Bewegungsmuster, z. B. Drehung, Kreis oder Schleifen, an dem Ort bewegt, bis eine Datenübertragung abgeschlossen ist. Durch das vorstehend beschriebene Verhalten wird sichergestellt, dass für die vollständige Übertragung der Daten eine ausreichend zuverlässige Datenverbindung gewährleistet ist, wodurch das Risiko von Unterbrechungen und Fehlern bei der Datenübertragung reduziert wird.

Alternativ oder zusätzlich ist insbesondere vorgesehen, dass während der Datenübertragung eine Bewegung an dem Ort erfolgt, beispielsweise zur Erledigung von Arbeitsaufgaben, aber gleichzeitig mindestens eine Signaleigenschaft des Funknetzes überwacht wird. Das Bewegen wird dabei vorzugsweise so lange fortgesetzt, bis mindestens ein Schwellenwert für mindestens eine Signaleigenschaft erreicht wird, beispielsweise eine vorbestimmte Signalstärke unterschritten wird. Auf diese Weise können beispielsweise die Erledigung von Arbeitsaufgaben und das Übertragen von Daten miteinander kombiniert werden, wobei gleichzeitig verhindert wird, dass die Datenübertragung unterbrochen wird, weil sich das Arbeitsgerät von dem für die Datenübertragung geeigneten Ort bzw. Bereich wegbewegt.

Die Abdeckung eines Funknetzes kann sich im Laufe der Zeit verändern. Das erfolgt sowohl dadurch, dass beispielsweise neue Funksender aufgestellt werden als auch dadurch, dass beispielsweise bauliche Veränderungen an der Bearbeitungsumgebung vorgenommen werden, die den Funkempfang beeinflussen. Vorteilhaft um derartige Änderungen an der Bearbeitungsumgebung und/oder dem Funknetz berücksichtigen zu können, ist gemäß einer weiteren Ausgestaltung des Arbeitsgerätes vorgesehen, dass das Arbeitsgerät ferner dazu ausgebildet und eingerichtet ist, das Erfassen mindestens einer Signaleigenschaft an unterschiedlichen Orten und das Verknüpfen zu Signalpositionsdaten zu wiederholen, um die Signalpositionsdaten zu aktualisieren oder zu ergänzen. Beispielsweise ist vorgesehen, dass das Erfassen von Signaleigenschaften an unterschiedlichen Orten bei jeder Bewegung in der Bearbeitungsumgebung zur Erledigung von Arbeitsaufgaben durchgeführt wird.

Insbesondere um den Energieverbrauch des Arbeitsgerätes zu reduzieren und gleichzeitig über ausreichend aktuelle Signalpositionsdaten zu verfügen, die Veränderungen berücksichtigen, ist beispielsweise auch vorgesehen, dass das wiederholte Erfassen von mindestens einer Signaleigenschaft an unterschiedlichen Orten in der Bearbeitungsumgebung in vorbestimmten Zeitintervallen, beispielsweise wöchentlich, monatlich oder vierteljährlich, durchgeführt wird. Ferner ist insbesondere auch vorgesehen, dass das Erfassen von mindestens einer Signaleigenschaft an unterschiedlichen Orten dann durchgeführt - also ereignisgesteuert - wird, wenn beispielsweise das Arbeitsgerät bei einer Bewegung zur Erledigung von Arbeitsaufgaben durch die Bearbeitungsumgebung eine Veränderung an der Bearbeitungsumgebung feststellt, beispielsweise eine Veränderung einer Grundfläche der Bearbeitungsumgebung. Die Bearbeitungsumgebung wird vorteilhaft zur Navigation stets vom Umgebungssensorsystem des Arbeitsgeräts erfasst. Werden diese Daten gespeichert und miteinander verglichen, können Veränderungen identifiziert und als auslösendes Ereignis für die Aktualisierung der Signalpositionsdaten herangezogen werden.

Der Aufwand für die Suche nach einem geeigneten Standort für die Basisstation für ein Arbeitsgerät wird für einen Benutzer gemäß einer weiteren Ausgestaltung des Arbeitsgeräts dadurch reduziert, dass vorgesehen ist, dass das Arbeitsgerät ferner dazu ausgebildet und eingerichtet ist, mindestens einen ermittelten, für eine Datenübertragung geeigneten Ort in der Bearbeitungsumgebung an einer Anzeigeeinrichtung für einen Benutzer als Standort für eine Basisstation für das Arbeitsgerät anzuzeigen. Dadurch, dass das Arbeitsgerät und/oder eine Datenverarbeitungseinrichtung mindestens einen oder eine Mehrzahl von Orten ermittelt hat, an denen eine Datenübertragung über das Funknetz vorteilhaft erfolgen kann, können auf dieser Basis auch geeignete Positionen für eine Basisstation, beispielsweise eine Ladestation für das Arbeitsgerät, bestimmt werden.

Beispielsweise wird vor der Anzeige des Ortes als Standort für eine Basisstation mindestens ein weiteres Kriterium überprüft, beispielsweise ein Abstand zu mindestens einer weiteren Basisstation, eine Neigung einer Oberfläche in der Bearbeitungsumgebung, oder mindestens ein weiteres ortsspezifisches Kriterium, das den Ort trotz guter Abdeckung durch das Funknetz als Standort für eine Basisstation ungeeignet macht.

Bei dem Standort für die Basisstation kann es sich beispielsweise um einen bestimmten Ort, insbesondere einen bestimmten Bereich, in der Bearbeitungsumgebung handeln, der auf Basis der Signalstärke des Funknetzes als Standort für eine Basisstation geeignet ist. Dieser Standort wird beispielsweise an einer Anzeigeeinrichtung an dem Arbeitsgerät in grafischer Form für einen Benutzer angezeigt oder der Standort für eine Basisstation wird an der Funkschnittstelle zur Anzeige an einer externen Anzeigeeinrichtung, beispielsweise einem mobilen Endgerät eines Benutzers, z. B. einem Smartphone, einem Tablet oder einem Notebook, bereitgestellt.

Insbesondere bei der Durchführung von Updates der Betriebssoftware des Arbeitsgeräts und/oder bei der Durchführung eines Firmware-Updates kann es erforderlich sein, dass sich das Arbeitsgerät in einer Basisstation befindet, beispielsweise um eine dauerhafte Spannungsversorgung sicherzustellen. Für den Fall, dass eine Datenverarbeitungseinrichtung, insbesondere mindestens ein Prozessor, des Arbeitsgeräts für die Durchführung des Updates verwendet werden muss, kann es zudem erforderlich sein, dass kein gleichzeitiger Betrieb des Arbeitsgeräts erfolgt, da sich das Arbeitsgerät für die Durchführung des Updates in einer Art "Ruhezustand" befinden muss.

Für diese Fälle ist es von wesentlicher Bedeutung, dass sich eine Basisstation des Arbeitsgeräts an einem Ort in der Bearbeitungsumgebung befindet, der für eine Datenübertragung geeignet ist. Sofern eine Basisstation eine eigene Funkschnittstelle zum Datenaustausch aufweist, ist eine Positionierung der Basisstation an einem für eine Datenübertragung geeigneten Ort ohnehin zwingend erforderlich.

Die vorliegende Ausgestaltung weist dazu den Vorteil auf, dass ein Benutzer nicht iterativ tätig werden muss, um einen geeigneten Ort für eine Basisstation zu finden, an dem auch eine Datenübertragung, beispielsweise zur Durchführung von Firmware-Updates, durchgeführt werden kann. Dem Benutzer wird das Auffinden dadurch erleichtert, dass das Arbeitsgerät mindestens einen Vorschlag oder eine Mehrzahl von Vorschlägen von Orten für einen geeigneten Standort einer Basisstation, insbesondere bereits nach einer initialen Kartierungsfahrt, für den Benutzer bereitstellt. Der Benutzer kann dann die Basisstation folglich gezielt dort positionieren, wo eine ausreichende Abdeckung des Funknetzes für eine Datenübertragung durch das Arbeitsgerät sichergestellt ist, wodurch das bisher erforderliche Herantasten an eine geeignete Position entfällt und der Aufwand für einen Benutzer reduziert wird.

Wenn sich die Basisstation an einem Ort mit für eine Datenübertragung ausreichender Abdeckung des Funknetzes befindet, besteht ein weiterer Vorteil darin, das eine Datenübertragung von und zu dem Arbeitsgerät in einer Ruhezeit des Arbeitsgeräts durchgeführt werden kann, in der es üblicherweise an der Basisstation positioniert ist. Eine derartige Ruhezeit ist beispielsweise zu Zeiten vorgesehen, in denen sich Menschen in der Bearbeitungsumgebung aufhalten, z. B. zu den Verkehrszeiten einer Verkaufsfläche. Vorteilhaft nachdem erforderliche Servicetätigkeiten, z. B. ein Laden des Energiespeichers und/oder ein Reinigen eines Schmutzsammelbehälters, abgeschlossen sind und insbesondere der Arbeitsplan keine sofort zu bearbeitenden Arbeitsaufgaben vorsieht, kann eine Datenübertragung, insbesondere zur Durchführung eines Updates, erfolgen. So kann das Arbeitsgerät die über seine Funkschnittstelle übertragenen Daten ohne die Notwendigkeit einer Ortsveränderung an dem Standort der Basisstation verarbeiten.

Besonders vorteilhaft ist vorgesehen, wenn das Anzeigen mindestens eines Ortes als Standort für eine Basisstation oder das Bereitstellen des Ortes zur Anzeige an einer externen Anzeigeeinrichtung dann erfolgt, also ereignisgesteuert, wenn das Arbeitsgerät erkennt, dass ein aktueller Standort der Basisstation für eine Datenübertragung mindestens eine Signaleigenschaft aufweist, die einen vorbestimmten Schwellenwert erreicht, insbesondere überschreitet oder unterschreitet. Wenn beispielsweise an dem aktuellen Standort der Basisstation eine Datenübertragungsrate zu gering oder eine Signaldämpfung zu groß ist, wird ein alternativer Standort für die Basisstation durch das Arbeitsgerät vorgeschlagen. Bei dem alternativen Standort handelt es sich um einen Ort, der für die Datenübertragung über mindestens ein Funknetz geeignet ist. Der Benutzer erhält dann einen Hinweis, die Basisstation ein einen neuen Standort zu versetzen. Dadurch werden Probleme bei der Datenübertragung bereits im Vorfeld verhindert, bevor eine Datenübertragung tatsächlich notwendig wird. Das Risiko des Auftretens von Fehlern im Betrieb wird weiter reduziert.

Das Arbeitsgerät ist insbesondere ferner dazu ausgebildet und eingerichtet zu überprüfen, ob ein Benutzer der Empfehlung für einen neuen Standort für die Basisstation gefolgt ist, oder nicht. Beispielsweise erfolgt nach Ablauf einer voreingestellten Zeit oder nach Feststellen von Datenübertragungsproblemen am Standort der Basisstation ein erneutes Anzeigen. Falls der Benutzer den Ort der Basisstation nicht verändert, ist insbesondere vorgesehen, dass sich das Arbeitsgerät in vorbestimmten Zeitintervallen zu mindestens einem Ort in der Bearbeitungsumgebung bewegt, um zu prüfen, ob Daten empfangen werden sollen, oder um Daten zu senden. Diese Ausgestaltung stellt vorteilhaft sicher, dass die Datenübertragung auch dann gewährleistet ist, wenn der Benutzer entgegen der Empfehlung durch das Arbeitsgerät keine Veränderung des Standorts der Basisstation vornimmt.

Gemäß einer weiteren Ausgestaltung des Arbeitsgerätes ist vorgesehen, dass das Arbeitsgerät mindestens ein Aktivierungsmittel zur manuellen Aktivierung einer Kartierungsfahrt in der Bearbeitungsumgebung durch einen Benutzer aufweist. Insbesondere wenn das Arbeitsgerät bei einem erstmaligen Einsatz in einer Bearbeitungsumgebung keine Verbindung zu einem Funknetz hat, um beispielsweise Steueranweisungen über das Funknetz zu erhalten, ist es erforderlich, dass eine Kartierungsfahrt zur Erfassung von Daten zur Bearbeitungsumgebung manuell durch einen Benutzer gestartet werden kann. Beispielsweise handelt es sich dabei um eine spezielle Taste an dem Arbeitsgerät oder ein Eingabemittel, z. B. einen Touchscreen, an dem Arbeitsgerät.

Nach dieser initialen Kartierungsfahrt verfügt das Arbeitsgerät dann über ausreichend Daten, um sich bei dem Erfordernis einer Datenübertragung oder für den Empfang von Daten an einen dann bekannten Ort zu begeben, der für eine Datenübertragung geeignet ist oder - wie vorstehend beschrieben - den Nutzer veranlassen kann, eine Basisstation an einem bestimmten Ort zu positionieren.

Die eingangs genannte Aufgabe ist ferner gelöst durch ein Verfahren zum Betrieb eines Arbeitsgerätes, insbesondere eines Arbeitsgerätes nach einem der beschriebenen Ausführungsbeispiele. Das Arbeitsgerät weist mindestens eine Funkschnittstelle zur Datenübertragung auf und ist dazu eingerichtet und ausgebildet, sich in einer Bearbeitungsumgebung autonom fortzubewegen. Das Verfahren umfasst zumindest den Verfahrensschritt des Verarbeitens von Signalpositionsdaten, wobei die Signalpositionsdaten mindestens eine Signaleigenschaft mindestens eines für die Datenübertragung geeigneten Funknetzes an unterschiedlichen Orten in der Bearbeitungsumgebung repräsentieren. Ferner ist das Arbeitsgerät dazu ausgebildet und eingerichtet, zur Durchführung von Arbeitsaufgaben in Bearbeitungsumgebungen eingesetzt zu werden, in welchen das Funknetz nicht in allen Bereichen der Bearbeitungsumgebung eine ausreichende Signalstärke für eine Datenverbindung aufweist.

Die Signalpositionsdaten werden beispielsweise dazu verarbeitet, mindestens einen für eine Datenübertragung über das Funknetz geeigneten Ort in der Bearbeitungsumgebung unter Verwendung mindestens eines Schwellenwertes bezüglich der Signaleigenschaft zu bestimmen. Alternativ oder zusätzlich umfasst das Verarbeiten der Signalpositionsdaten auch das Bereitstellen der Signalpositionsdaten an der Funkschnittstelle zur Übermittlung an eine Datenverarbeitungseinrichtung.

Die Kenntnis der für die Datenübertragung geeigneten Orte dient - wie vorstehend ausgeführt - dazu, das Risiko von Problemen bei der Datenübertragung zu minimieren und dadurch die Autonomie des Arbeitsgeräts zu steigern.

Die von dem Arbeitsgerät erfasste Signaleigenschaft ist beispielsweise die Signalstärke, z. B. ein Leistungspegel in dB, eine Signaldämpfung, eine Datenübertragungsrate oder Übertragungstechnologie. Wenn beispielsweise die Signaldämpfung an einem bestimmten Ort einen vorbestimmten Schwellenwert unterschreitet, ist dieser Ort für eine Datenübertragung über das Funknetz geeignet. Ferner ist beispielsweise vorgesehen, dass ein Ort als geeignet ermittelt wird, wenn die Datenübertragungsrate einen vorbestimmten Schwellenwert überschreitet. Nach dem Ermitteln mindestens eines für die Datenübertragung geeigneten Ortes erfolgt vorzugsweise ein Speichern des Ortes bzw. der ermittelten Orte in einem Speicher. Der Speicher ist beispielsweise Teil einer Steuereinrichtung des Arbeitsgerätes.

Vorzugsweise ist vorgesehen, dass das Verfahren durch ein Arbeitsgerät, insbesondere unter Verwendung einer Steuereinrichtung des Arbeitsgerätes, durchgeführt wird. Die Steuereinrichtung des Arbeitsgerätes weist dazu mindestens eine Datenverarbeitungseinrichtung mit mindestens einem Prozessor und mindestens einem Speicher auf.

Alternativ oder zusätzlich dazu ist vorgesehen, dass ferner mindestens eine entfernt angeordnete Datenverarbeitungseinrichtung vorgesehen ist, beispielsweise ein Server, ein Smartphone eines Benutzers oder ein Tablet, auf der bzw. auf denen zumindest ein Teil der Verfahrensschritte durchgeführt werden.

Vorzugsweise ist vorgesehen, dass das Verarbeiten von Signalpositionsdaten das Erfassen von mindestens einer Signaleigenschaft mindestens eines Funknetzes an unterschiedlichen Orten in der Bearbeitungsumgebung und Verknüpfen der Signaleigenschaft mit dem jeweiligen Ort zu Signalpositionsdaten beinhaltet. Vorteilhaft ist vorgesehen, dass ein Erfassen mindestens einer Signaleigenschaft zumindest im Rahmen einer initialen Kartierungsfahrt des Arbeitsgerätes und/oder im Rahmen einer Bewegung innerhalb der Bearbeitungsumgebung zur Erledigung von Arbeitsaufgaben erfolgt.

Besonders vorteilhaft ist vorgesehen, dass das Erfassen zeitgesteuert und/oder ereignisgesteuert wiederholt wird, um die Signalpositionsdaten zu aktualisieren und/oder zu ergänzen.

Erfindungsgemäß ist vorgesehen, dass ferner der Verfahrensschritt des Veranlassens des Arbeitsgerätes, sich an mindestens einen für eine Datenübertragung geeigneten Ort in der Bearbeitungsumgebung zu bewegen, vorgesehen ist. Das Arbeitsgerät bewegt sich an den zur Datenübertragung geeigneten Ort, um eine Datenübertragung über das Funknetz durchzuführen, beispielsweise um ein Firmware-Update zu empfangen oder Betriebsdaten zu senden. Diese Ausgestaltung stellt sicher, dass eine Datenübertragung überhaupt vollständig erfolgen kann, bevorzugt bei großen Datenmengen wie bei einem Firmware-Update.

Das Veranlassen des Arbeitsgerätes, sich an mindestens einen für die Datenübertragung geeigneten Ort zu bewegen, um eine Datenübertragung über das Funknetz durchzuführen, erfolgt erfindungsgemäß bei Auftreten eines vorbestimmten Ereignisses, beispielsweise bei Nichtauffinden einer Basisstation, einem Defekt, einer Fehlfunktion oder einem Regenerationsbedarf eines Arbeitswerkzeugs o.ä., und/oder zum Übertragen - Senden oder Empfangen - von Daten mit einer Größe, die einen vorbestimmten Schwellenwert überschreitet, und/oder zeitgesteuert.

Insbesondere um eine vorteilhafte Datenübertragung zu ermöglichen, ist gemäß einer weiteren Ausgestaltung des Verfahrens vorgesehen, dass ein Verweilen des Arbeitsgerätes an einem für die Datenübertragung geeigneten Ort erfolgt, bis die Datenübertragung abgeschlossen ist. Dazu bleibt das Arbeitsgerät beispielsweise ohne Bewegung an einem Ort, insbesondere in einem Bereich, in der Bearbeitungsumgebung stehen. Es wird damit verhindert, dass sich das Arbeitsgerät bei der Datenübertragung von dem dafür geeigneten Ort wegbewegt, wodurch eine Datenübertragung unterbrochen würde.

Alternativ dazu ist vorgesehen, dass an dem Ort, insbesondere in dem Bereich, ein Bewegen des Arbeitsgerätes zur Erledigung von Arbeitsaufgaben während der Datenübertragung erfolgt, solange mindestens eine aktuell ermittelte Signaleigenschaft mindestens eines Funknetzes mindestens einen Schwellenwert erreicht, also beispielsweise überschreitet oder unterschreitet. Die Entscheidung, ob das Arbeitsgerät während der Datenübertragung weiterfährt oder anhält, erfolgt folglich auf Basis einer aktuell erfassten Signaleigenschaft mindestens eines Funknetzes. Nimmt beispielsweise die Signalstärke während der Bewegung ab, bleibt das Arbeitsgerät stehen, um die Datenübertragung abzuschließen.

Als besonders vorteilhaft hat sich gemäß einer weiteren Ausgestaltung des Verfahrens herausgestellt, wenn vorgesehen ist, dass als weiterer Verfahrensschritt ein Anzeigen mindestens eines Ortes, der für die Datenübertragung über das Funknetz geeignet ist, an einer Anzeigeeinrichtung für einen Benutzer als Standort für eine Basisstation für das Arbeitsgerät erfolgt. Ferner ist auch vorgesehen, dass eine Mehrzahl von Orten, die für eine Datenübertragung als Standort für eine Basisstation für das Arbeitsgerät geeignet sind, an einer Anzeigeeinrichtung angezeigt werden. Das Anzeigen erfolgt beispielsweise an einer Anzeigeeinrichtung der Basisstation oder an einer Anzeigeeinrichtung einer Datenverarbeitungseinrichtung, beispielsweise eines mobilen Endgerätes eines Benutzers, beispielsweise eines Smartphones, Tablets oder Notebooks, oder an einem Monitor eines Computers. Das Anzeigen des mindestens einen Ortes erfolgt beispielsweise in einer grafischen Darstellung, beispielsweise in einem Kartenformat der Bearbeitungsumgebung.

Diese Ausgestaltung hat gegenüber dem Stand der Technik den Vorteil, dass ein Benutzer nicht iterativ einen Standort mit ausreichender Funknetzabdeckung für die Basisstation ermitteln muss, indem die Basisstation mehrfach neu positioniert wird, sondern dass, insbesondere nach einer initialen Kartierungsfahrt des Arbeitsgerätes, mindestens ein Standort vorgeschlagen wird. Der Aufwand des Benutzers wird dadurch maßgeblich reduziert, da die Basisstation gezielt aufgestellt werden kann und gleichzeitig eine Datenübertragung an diesem Ort, entweder durch die Basisstation selbst - bei Basisstationen mit einer Funkschnittstelle - oder durch ein in der Basisstation befindliches Arbeitsgerät, sichergestellt wird.

Eine weitere Ausgestaltung des Verfahrens sieht vor, dass als mindestens ein weiterer Verfahrensschritt das Bereithalten von zur Übertragung über die Funkschnittstelle über das Funknetz vorgesehenen Daten erfolgt, so lange, bis ein für die Datenübertragung geeigneter Ort bei einer Bewegung in der Bearbeitungsumgebung zur Erledigung von Arbeitsaufgaben erreicht ist. Das Arbeitsgerät plant sozusagen die Datenübertragung über die Funkschnittstelle und enthält solche Daten, beispielsweise Mess-, Umgebungs- oder Betriebsdaten des Arbeitsgerätes, Signalpositionsdaten oder andere Daten, so lange bereit, bis bei einer Bewegung in der Bearbeitungsumgebung zur Erledigung von Arbeitsaufgaben ein Ort, insbesondere ein Bereich, mit ausreichender Signalstärke des Funknetzes für eine Datenübertragung erreicht ist, so dass die Datenübertragung über das Funknetz vorteilhaft erfolgen kann.

Vorzugsweise ist vorgesehen, dass das Bereithalten nur von solchen Daten erfolgt, die eine bestimmte Größe überschreiten. Wenn beispielsweise sehr große Datenpakete vorhanden sind, werden diese nicht sofort über die Funkschnittstelle übertragen, sondern so lange zur Übertragung bereitgehalten, bis die Signalstärke bei einer Bewegung in der Bearbeitungsumgebung ausreichend ist, um große Datenmengen zu übertragen.

Die Erfindung betrifft ferner ein Arbeitsgerät, das zur Durchführung eines Verfahrens nach einem der beschriebenen Ausführungsbeispiele ausgebildet und eingerichtet ist. Zudem betrifft die Erfindung ein System mit einem Arbeitsgerät und einer Datenverarbeitungseinrichtung, die über das Funknetz erreichbar sind, wobei das System dazu ausgebildet und eingerichtet ist, ein Verfahren nach einem der beschriebenen Ausführungsbeispiele durchzuführen.

Die Erfindung betrifft ferner ein System, aufweisend mindestens ein Arbeitsgerät nach einem der beschriebenen Ausführungsbeispiele und mindestens eine Datenverarbeitungseinrichtung. Die Datenverarbeitungseinrichtung ist beispielsweise als über das Funknetz erreichbarer Server dazu ausgebildet und eingerichtet, unter Verwendung von empfangenen Signalpositionsdaten unter Verwendung mindestens eines Schwellenwertes bezüglich der Signaleigenschaft mindestens einen für eine Datenübertragung über das Funknetz geeigneten Ort in der Bearbeitungsumgebung zu ermitteln und zumindest diesen Ort bzw. diesen Ort betreffende Daten über die Funkschnittstelle an das Arbeitsgerät zu übermitteln. Die Bestimmung des oder der für die Datenübertragung geeigneten Ortes bzw. Orte erfolgt folglich insbesondere nicht durch eine Steuereinrichtung des Arbeitsgerätes, sondern durch eine über das Funknetz erreichbare Datenverarbeitungseinrichtung. Auf diese Weise wird zumindest ein Teil der Rechenprozesse auf externe Datenverarbeitungseinrichtungen ausgelagert.

Die eingangs genannte Aufgabe ist ferner gelöst durch eine Basisstation für ein Arbeitsgerät, insbesondere für ein Arbeitsgerät nach einem der beschriebenen Ausführungsbeispiele, die mindestens eine Funkschnittstelle zum Herstellen einer Verbindung mit einem Funknetz, insbesondere eine Funkschnittstelle zu einem Mobilfunknetz, aufweist. Ferner weist die Basisstation mindestens eine Anzeigeeinrichtung zur Anzeige einer Signalstärke mindestens eines Funknetzes, insbesondere Mobilfunknetzes, auf. Die Basisstation kann dann durch einen Benutzer in der Bearbeitungsumgebung bewegt werden, wobei gleichzeitig an der Anzeigeeinrichtung die Signalstärke, z. B. ein Leistungspegel, des Funknetzes, insbesondere Mobilfunknetzes, angezeigt wird. Die Basisstation kann dann von einem Benutzer entsprechend in der Bearbeitungsumgebung positioniert werden, insbesondere nämlich an einem Ort, an dem eine hohe Signalstärke an der Anzeigeeinrichtung für die Signalstärke angezeigt wird. Die Basisstation kann in diesem Fall ähnlich wie ein Router als Zugangspunkt für mehrere Arbeitsgeräte verwendet werden.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Arbeitsgerätes in einer Bearbeitungsumgebung,
- Fig. 2: ein Ausführungsbeispiel einer Bearbeitungsumgebung,
- Fig. 3: eine beispielhafte Darstellung von Signalpositionsdaten, und
- Fig. 4: ein Ausführungsbeispiel eines schematischen Ablaufs eines Verfahrens.

In den verschiedenen Figuren der Zeichnung sind gleiche Teile stets mit denselben Bezugszeichen versehen.

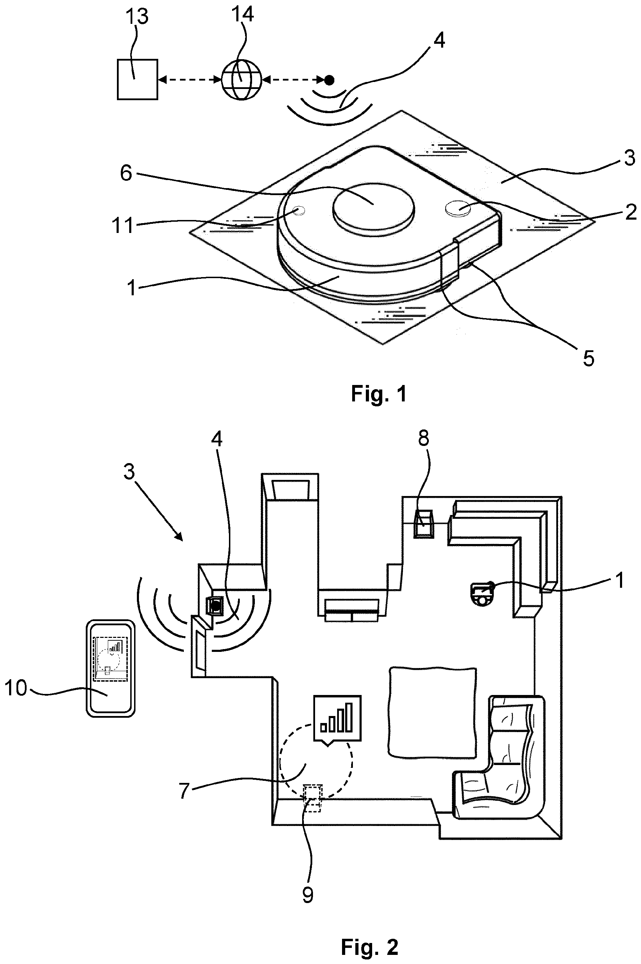

Fig. 1 zeigt ein Ausführungsbeispiel eines Arbeitsgerätes 1 mit mindestens einer Funkschnittstelle 2 zur Datenübertragung, also zum Empfangen und zum Senden von Daten über mindestens eines in einer Bearbeitungsumgebung 3 vorhandenes Funknetz 4. Das Funknetz 4 stellt beispielsweise über ein Netzwerk 14, beispielsweise das Internet, eine Datenverbindung zu einer Datenverarbeitungseinrichtung 13 her.

Das Arbeitsgerät 1 gemäß Fig. 1 ist dazu ausgebildet und eingerichtet, sich in der Bearbeitungsumgebung 3 autonom fortzubewegen. Dazu weist das Arbeitsgerät 1 eine Mehrzahl an Antriebsrädern 5 auf. Zur Navigation innerhalb der Bearbeitungsumgebung 3 weist das Arbeitsgerät 1 mindestens ein Umgebungssensorsystem 6 auf, mit dem Umgebungsdaten der Bearbeitungsumgebung 3 erfassbar sind, wodurch eine Navigation des Arbeitsgerätes 1 in der Bearbeitungsumgebung 3 ermöglicht wird. Das Arbeitsgerät 1 ist dazu ausgebildet und eingerichtet, mindestens eine Signaleigenschaft, beispielsweise eine Signalstärke, mindestens eines für eine Datenübertragung geeigneten Funknetzes 4 an unterschiedlichen Orten in der Bearbeitungsumgebung 3 zu erfassen und durch Verknüpfung mit den Positionsdaten des jeweiligen Ortes daraus Signalpositionsdaten zu erzeugen. Die Signalpositionsdaten werden in einem Speicher, beispielsweise in einem Speicher einer Steuereinrichtung des Arbeitsgerätes 1, abgelegt oder über das Funknetz 4 an eine Datenverarbeitungseinrichtung 13 übermittelt.

Fig. 2 zeigt ein Ausführungsbeispiel einer Bearbeitungsumgebung 3, in der ein Arbeitsgerät 1 angeordnet ist. Das Arbeitsgerät 1 ist hier als Reinigungsgerät, nämlich als Saug- und Wischroboter, ausgebildet. Unter Verwendung mindestens eines Schwellenwertes bezüglich der mindestens einen Signaleigenschaft kann das Arbeitsgerät 1 mindestens einen für eine Datenübertragung über das Funknetz 4 geeigneten Ort 7 in der Bearbeitungsumgebung 3 ermitteln. An diesem Ort 7 ist beispielsweise eine Signalstärke des Funknetzes 4 oder eine Datenübertragungsrate ausreichend groß, um eine vorteilhafte Datenübertragung, insbesondere von großen Datenmengen, z. B. für ein Firmware-Update oder die Übermittlung von Kartendaten, zu ermöglichen. Insbesondere wird an dem Ort 7 beispielsweise eine Mindestdatenübertragungsrate erreicht.

Im in Fig. 2 dargestellten Ausführungsbeispiel ist eine Basisstation 8 für das Arbeitsgerät 1 an einem Ort angeordnet, der für eine Datenübertragung nicht geeignet ist, da hier von dem Arbeitsgerät 1 eine nicht ausreichende Abdeckung durch das Funknetz 4 ermittelt worden ist. Das Arbeitsgerät 1 ist dazu ausgebildet und eingerichtet, einem Benutzer mindestens einen für die Datenübertragung geeigneten Ort 7 in der Bearbeitungsumgebung 3 an einer Anzeigeeinrichtung als Standort 9 für die Basisstation 8 anzuzeigen. Der Standort 9 am Ort 7 bzw. im Bereich 7 ist als Standort für die Basisstation 8 besser geeignet, da hier eine ausreichende Signalstärke des Funknetzes 4 zur Datenübertragung gewährleistet ist. Auf Basis der Anzeige des neuen Standorts 9 an einer Anzeigeeinrichtung 10, beispielsweise an einem mobilen Endgerät eines Benutzers, hier einem Smartphone, kann der Benutzer eine Neupositionierung der Basisstation 8 vornehmen.

Gemäß Fig. 1 weist das Arbeitsgerät 1 ferner ein Aktivierungsmittel 11 auf, hier in Form einer speziell dafür ausgebildeten Taste, um eine Kartierungsfahrt in der Bearbeitungsumgebung 3 durch einen Benutzer zu veranlassen. Bei der Kartierungsfahrt werden Daten zur Navigation innerhalb der Bearbeitungsumgebung 3 durch das Arbeitsgerät 1 erfasst sowie an unterschiedlichen Orten in der Bearbeitungsumgebung 3 mindestens eine Signaleigenschaft mindestens eines Funknetzes 4 erfasst, um daraus Signalpositionsdaten zu erzeugen.

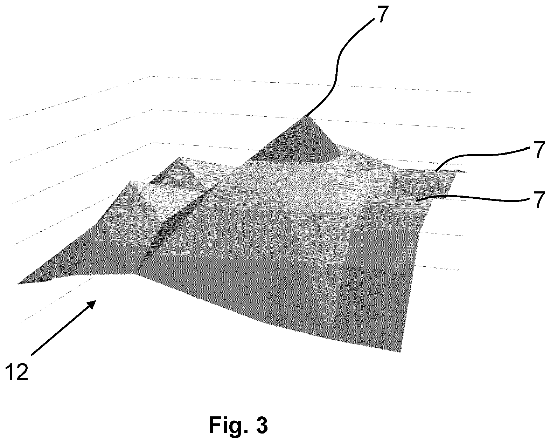

Fig. 3 zeigt beispielhaft eine grafische Darstellung von Signalpositionsdaten 12 einer Bearbeitungsumgebung 3. Beispielhaft wird hier die Signalstärke eines Funknetzes 4 in der Fläche der Bearbeitungsumgebung 3 grafisch dargestellt. Deutlich zu erkennen sind die für eine Datenübertragung geeigneten Orte 7, an denen beispielsweise eine Mindestdatenrate zur Datenübertragung über das Funknetz 4 erreicht wird.

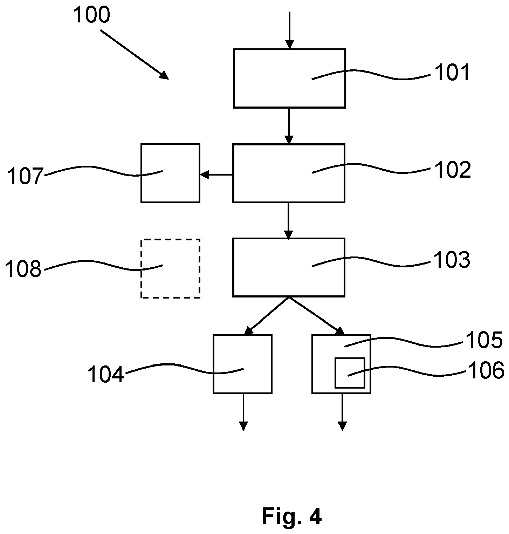

Fig. 4 zeigt ein Ausführungsbeispiel eines schematischen Ablaufs eines Verfahrens 100 zum Betrieb eines Arbeitsgerätes 1. Das Verfahren 100 umfasst das Verarbeiten 101 von Signalpositionsdaten 12, wobei die Signalpositionsdaten 12 mindestens eine Signaleigenschaft mindestens eines für die Datenübertragung geeigneten Funknetzes 4 an unterschiedlichen Orten in der Bearbeitungsumgebung 3 repräsentieren. Auf Basis der verarbeiteten Signalpositionsdaten 12 erfolgt ein Bestimmen 102 mindestens eines für die Datenübertragung über das Funknetz 4 geeigneten Ortes 7 in der Bearbeitungsumgebung 3 unter Verwendung mindestens eines Schwellenwertes bezüglich der mindestens einen Signaleigenschaft.

In Kenntnis der für eine Datenübertragung über das Funknetz 4 geeigneten Orte 7 in der Bearbeitungsumgebung 3 erfolgt ein Veranlassen 103 des Arbeitsgerätes 1, sich an mindestens einen für die Datenübertragung geeigneten Ort 7 zu bewegen, um eine Datenübertragung über das Funknetz 4 durchzuführen, beispielsweise ein Firmware-Update für das Funknetz 4 von einer Datenverarbeitungseinrichtung 13 - siehe Fig. 1 - zu erhalten. Das Veranlassen 103 erfolgt beispielsweise zeitgesteuert, insbesondere beispielsweise einmal im Monat oder ereignisgesteuert wie vorstehend beschrieben.

Während einer Datenübertragung über das Funknetz 4 erfolgt entweder ein Verweilen 104 des Arbeitsgerätes 1 an dem für die Datenübertragung geeigneten Ort 7 oder ein Bewegen 105 des Arbeitsgerätes 1 zur Erledigung von Arbeitsaufgaben. Während des Bewegens 105 erfolgt ein Überwachen 106 mindestens einer aktuellen Signaleigenschaft des Funknetzes 4. Wenn diese Signaleigenschaft einen vorbestimmten Schwellenwert erreicht, beispielsweise überschreitet oder unterschreitet, erfolgt beispielsweise ein Anhalten des Arbeitsgerätes 1, bis die Datenübertragung beendet ist.

Auf Basis der Bestimmung 102 der Orte 7, die für eine Datenübertragung geeignet sind, erfolgt vorzugsweise ein Anzeigen 107 mindestens eines Ortes 7, der für die Datenübertragung über das Funknetz 4 geeignet ist, an einer Anzeigeeinrichtung 10 (s. beispielsweise Fig. 2) für einen Benutzer als Standort 9 für eine Basisstation 8 für das Arbeitsgerät 1. Dieses Anzeigen 107 erfolgt insbesondere dann, wenn ein aktueller Standort der Basisstation 8 für eine Datenübertragung ungünstige Signaleigenschaften aufweist, beispielsweise eine Mindestdatenrate an dem aktuellen Standort nicht erreicht wird.

Vorzugsweise ist vorgesehen, dass ein Bereithalten 108 von zur Übertragung über die Funkschnittstelle 2 über das Funknetz 4 vorgesehenen Daten erfolgt, bis ein für die Datenübertragung geeigneter Ort 7 bei einer Bewegung in einer Bearbeitungsumgebung 3 zur Erledigung von Arbeitsaufgaben erreicht ist. Das Arbeitsgerät 1 wird folglich derart gesteuert, dass es zur Datenübertragung nicht eine gesonderte Bewegung zu einem geeigneten Ort 7 unternimmt, sondern mit der Datenübertragung so lange gewartet wird, bis ein geeigneter Ort 7 bei einer normalen Bewegungsfahrt während der Ausführung von Arbeitsaufgaben erreicht ist. Das Bereithalten 108 erfolgt beispielsweise dann, wenn zur Übertragung vorgesehene Daten eine vorbestimmte Datenmenge überschreiten.

### Bezugszeichenliste

- 1: Arbeitsgerät
- 2: Funkschnittstelle
- 3: Bearbeitungsumgebung
- 4: Funknetz
- 5: Antriebsräder
- 6: Umgebungssensorsystem
- 7: Geeigneter Ort zur Datenübertragung
- 8: Basisstation
- 9: Standort
- 10: Anzeigeeinrichtung
- 11: Aktivierungsmittel
- 12: Grafisch dargestellte Signalpositionsdaten
- 13: Datenverarbeitungseinrichtung
- 14: Netzwerk
- 100: Verfahren
- 101: Verarbeiten
- 102: Bestimmen
- 103: Veranlassen
- 104: Verweilen
- 105: Bewegen
- 106: Überwachen
- 107: Anzeigen
- 108: Bereithalten

## Patentansprüche

1. Arbeitsgerät (1) mit mindestens einer Funkschnittstelle (2) zur Datenübertragung, wobei das Arbeitsgerät (1) zumindest dazu ausgebildet und eingerichtet ist, sich in einer Bearbeitungsumgebung (3) autonom fortzubewegen und mindestens eine Signaleigenschaft mindestens eines für eine Datenübertragung geeigneten Funknetzes (4) an unterschiedlichen Orten in der Bearbeitungsumgebung (3) zu erfassen und durch Verknüpfung mit den Positionsdaten des jeweiligen Ortes Signalpositionsdaten (12) zu erzeugen, wobei das Arbeitsgerät (1) ferner dazu ausgebildet und eingerichtet ist, unter Verwendung mindestens eines Schwellenwerts bezüglich der Signaleigenschaft mindestens einen für eine Datenübertragung über das Funknetz geeigneten Ort (7) in der Bearbeitungsumgebung (3) zu ermitteln und/oder die Signalpositionsdaten (12) zur Ermittlung mindestens eines für eine Datenübertragung über das Funknetz (4) geeigneten Ortes (7) in der Bearbeitungsumgebung (3) unter Verwendung mindestens eines Schwellenwerts bezüglich der Signaleigenschaft durch eine Datenverarbeitungseinrichtung (13) an der Funkschnittstelle (2) bereitzustellen und Daten zu mindestens einem ermittelten Ort (7) zu empfangen,
**dadurch gekennzeichnet, dass**
das Arbeitsgerät (1) ferner dazu ausgebildet und eingerichtet ist, zur Durchführung von Arbeitsaufgaben in Bearbeitungsumgebungen (3) eingesetzt zu werden, in welchen das Funknetz (4) nicht in allen Bereichen der Bearbeitungsumgebung (3) eine ausreichende Signalstärke für eine Datenverbindung aufweist, dass das Arbeitsgerät (1) ferner dazu ausgebildet und eingerichtet ist, sich bei Auftreten eines vorbestimmten Ereignisses und/oder zum Übertragen - Senden oder Empfangen - von Daten mit einer Größe, die einen vorbestimmten Schwellenwert überschreitet, und/oder zeitgesteuert an einen zur Datenübertragung geeigneten Ort (7) in der Bearbeitungsumgebung (7) zu bewegen.

2. Arbeitsgerät (1) nach Anspruch 1,
**dadurch gekennzeichnet, dass**
das Arbeitsgerät (1) ferner dazu ausgebildet und eingerichtet ist, sich bei Auftreten einer Fehlfunktion an einen zur Datenübertragung geeigneten Ort (7) zu bewegen.

3. Arbeitsgerät (1) nach Anspruch 1 oder 2,
**dadurch gekennzeichnet, dass**
das Arbeitsgerät (1) ferner dazu ausgebildet und eingerichtet ist, für eine Übertragung an der Funkschnittstelle (2) vorgesehene Daten bereitzuhalten, bis bei einer Bewegung in der Bearbeitungsumgebung (3) zur Erledigung von Arbeitsaufgaben ein für eine Datenübertragung geeigneter Ort (7) erreicht ist.

4. Arbeitsgerät (1) nach einem der Ansprüche 1 bis 3,
**dadurch gekennzeichnet, dass**
das Arbeitsgerät (1) ferner dazu ausgebildet und eingerichtet ist, an dem Ort (7) zu verweilen, bis eine Datenübertragung abgeschlossen ist und/oder für eine Datenübertragung eine Bewegung an dem Ort (7) zu verlangsamen und/oder während der Datenübertragung eine Bewegung an dem Ort (7), beispielsweise zur Erledigung von Arbeitsaufgaben, fortzusetzen, insbesondere in Abhängigkeit von mindestens einem Schwellenwert für mindestens eine aktuelle bestimmte Signaleigenschaft fortzusetzen.

5. Arbeitsgerät (1) nach einem der Ansprüche 1 bis 4,
**dadurch gekennzeichnet, dass**
das Arbeitsgerät (1) ferner dazu ausgebildet und eingerichtet ist, das Erfassen mindestens einer Signaleigenschaft an unterschiedlichen Orten und das Verknüpfen zu Signalpositionsdaten (12) zu wiederholen, um die Signalpositionsdaten (12) zu aktualisieren und/oder zu ergänzen, insbesondere zeitgesteuert und/oder ereignisgesteuert zu wiederholen.

6. Arbeitsgerät nach einem der Ansprüche 1 bis 5,
**dadurch gekennzeichnet, dass**
das Arbeitsgerät (1) ferner dazu ausgebildet und eingerichtet ist, mindestens einen ermittelten, für eine Datenübertragung geeigneten Ort (7) in der Bearbeitungsumgebung (3) an einer Anzeigeeinrichtung für einen Benutzer als Standort (9) für eine Basisstation (8) für das Arbeitsgerät (1) anzuzeigen oder mindestens einen ermittelten, für eine Datenübertragung geeigneten Ort (7) in der Bearbeitungsumgebung (3) an der Funkschnittstelle (2) für eine Anzeige an einer Anzeigeeinrichtung bereitzustellen, insbesondere dass das Anzeigen oder das Bereitstellen zum Anzeigen erfolgt, wenn das Funknetz (4) an einem aktuellen Standort der Basisstation (8) eine Signaleigenschaft aufweist, die einen vorbestimmten Schwellenwert erreicht.

7. Arbeitsgerät (1) nach einem der Ansprüche 1 bis 6,
**dadurch gekennzeichnet, dass**
die mindestens eine Signaleigenschaft eine Signalstärke und/oder eine Frequenz und/oder eine Signaldämpfung und/oder eine Datenübertragungsrate und/oder eine Übertragungstechnologie ist.

8. Arbeitsgerät (1) nach einem der Ansprüche 1 bis 7,
**dadurch gekennzeichnet, dass**
das Arbeitsgerät (1) mindestens ein Aktivierungsmittel (11) zur manuellen Aktivierung einer Kartierungsfahrt in der Bearbeitungsumgebung (3) durch einen Benutzer aufweist, und dass die Kartierungsfahrt das Erfassen von mindestens einer Signaleigenschaft mindestens eines Funknetzes (4) an unterschiedlichen Orten in der Bearbeitungsumgebung (3) beinhaltet.

9. Verfahren (100) zum Betrieb eines Arbeitsgeräts (1), nach einem der Ansprüche 1 bis 8, wobei das Arbeitsgerät (1) mindestens eine Funkschnittstelle (2) zur Datenübertragung aufweist, und wobei das Arbeitsgerät (1) zumindest dazu ausgebildet und eingerichtet ist, sich in einer Bearbeitungsumgebung (3) autonom fortzubewegen, wobei in der Bearbeitungsumgebung (3) ein für die Datenübertragung geeignetes Funknetz (4) nicht in allen Bereichen der Bearbeitungsumgebung (3) eine ausreichende Signalstärke für eine Datenverbindung aufweist, wobei zumindest folgender Verfahrensschritt umfasst ist:
- Verarbeiten (101) von Signalpositionsdaten (12), wobei die Signalpositionsdaten (12) mindestens eine Signaleigenschaft mindestens des einen für die Datenübertragung geeigneten Funknetzes (4) an unterschiedlichen Orten in der Bearbeitungsumgebung (3) repräsentieren,
**dadurch gekennzeichnet, dass**
ferner mindestens folgender Verfahrensschritt umfasst ist:
- Bestimmen (102) mindestens eines für eine Datenübertragung über das Funknetz (4) geeigneten Ortes (7) in der Bearbeitungsumgebung (3) unter Verwendung mindestens eines Schwellenwerts bezüglich der Signaleigenschaft,
- Veranlassen (103) des Arbeitsgeräts (1), sich bei Auftreten eines vorbestimmten Ereignisses und/oder zum Übertragen - Senden oder Empfangen - von Daten mit einer Größe, die einen vorbestimmten Schwellenwert überschreitet, und/oder zeitgesteuert an einen zur Datenübertragung geeigneten Ort (7) zu bewegen,
dass das Arbeitsgerät (1) ferner dazu ausgebildet und eingerichtet ist, zur Durchführung von Arbeitsaufgaben in Bearbeitungsumgebungen (3) eingesetzt zu werden, in welchen das Funknetz (4) nicht in allen Bereichen der Bearbeitungsumgebung (3) eine ausreichende Signalstärke für eine Datenverbindung aufweist.

10. Verfahren (100) nach Anspruch 9,
**dadurch gekennzeichnet, dass**
ferner mindestens zumindest folgender Verfahrensschritt umfasst ist:
- Anzeigen (107) mindestens eines Ortes (7), der für eine Datenübertragung über das Funknetz (4) geeignet ist, an einer Anzeigeeinrichtung für einen Benutzer als Standort (9) für eine Basisstation (8) für das Arbeitsgerät (1), insbesondere wenn an einem aktuellen Standort der Basisstation (8) das Funknetz (4) mindestens eine Signaleigenschaft aufweist, die einen vorbestimmten Schwellenwert erreicht.

11. Verfahren (100) nach Anspruch 9 oder 10,
**dadurch gekennzeichnet, dass**
ferner mindestens zumindest folgender Verfahrensschritte umfasst ist:
- Bereithalten (108) von zur Übertragung über die Funkschnittstelle (2) über das Funknetz (4) vorgesehenen Daten, bis ein für die Datenübertragung geeigneter Ort (7) bei einer Bewegung des Arbeitsgeräts (1) in der Bearbeitungsumgebung (3) zur Erledigung von Arbeitsaufgaben erreicht ist.

12. Verfahren (100) nach einem der Ansprüche 9 bis 11,
**dadurch gekennzeichnet, dass**
ein Verweilen (104) des Arbeitsgeräts (1) an einem für die Datenübertragung geeigneten Ort (7) erfolgt, bis eine Datenübertragung abgeschlossen ist und/oder dass ein Bewegen (105) zur Erledigung von Arbeitsaufgaben während der Datenübertragung erfolgt, solange mindestens ein aktueller Schwellenwert mindestens einer Signaleigenschaft erreicht ist.

13. System, aufweisend mindestens ein Arbeitsgerät (1) nach einem der Ansprüche 1 bis 8 und mindestens eine Datenverarbeitungseinrichtung (13), wobei die Datenverarbeitungseinrichtung (13) dazu ausgebildet und eingerichtet ist, unter Verwendung mindestens eines Schwellenwerts in Bezug auf empfangene Signalpositionsdaten (12) mindestens einen für eine Datenübertragung über das Funknetz (4) geeigneten Ort (7) in der Bearbeitungsumgebung (3) zu bestimmen und insbesondere den Ort (7) betreffende Daten an das Arbeitsgerät (1) zu übermitteln.

## Claims

1. A working device (1) with at least one radio interface (2) for data transmission, wherein the working device (1) is at least designed and configured to move autonomously in a processing environment (3) and to detect at least one signal characteristic of at least one radio network (4) suitable for data transmission at different locations in the processing environment (3) and to generate signal position data (12) by linking with the position data of the respective location, wherein the working device (1) is further designed and configured to determine at least one location (7) in the processing environment (3) which is suitable for data transmission via the radio network using at least one threshold value with respect to the signal characteristic and/or to provide the signal position data (12) for determining at least one location (7) in the processing environment (3) which is suitable for data transmission via the radio network (4) using at least one threshold value with respect to the signal characteristic by means of a data processing device (13) at the radio interface (2) and to receive data relating to at least one determined location (7),
**characterized in that**
the working device (1) is also designed and configured to be used for carrying out work tasks in processing environments (3) in which the radio network (4) does not have sufficient signal strength for a data connection in all areas of the processing environment (3), **in that** the working device (1) is furthermore designed and configured to move to a location (7) in the processing environment (7) which is suitable for data transmission when a predetermined event occurs and/or for transmitting - sending or receiving - data with a size which exceeds a predetermined threshold value, and/or in a time-controlled manner.

2. Working device (1) according to claim 1,
**characterized in that**
the working device (1) is also designed and configured to move to a location (7) suitable for data transmission when a malfunction occurs.

3. Working device (1) according to claim 1 or 2,
**characterized in that**
the working device (1) is also designed and configured to hold data intended for transmission at the radio interface (2) during a movement in the processing environment (3) for completing work tasks until a location (7) suitable for data transmission is reached.

4. Working device (1) according to any one of claims 1 to 3,
**characterized in that**
the working device (1) is furthermore designed and configured to remain at the location (7) until a data transmission is completed and/or to slow down a movement at the location (7) for a data transmission and/or to continue a movement at the location (7) during the data transmission, for example for the completion of work tasks, in particular to continue it as a function of at least one threshold value for at least one current specific signal characteristic.

5. Working device (1) according to any one of claims 1 to 4,
**characterized in that**
the working device (1) is furthermore designed and configured to repeat the detection of at least one signal characteristic at different locations and the linking to signal position data (12) in order to update and/or supplement the signal position data (12), in particular to repeat it in a time-controlled and/or event-controlled manner.

6. Working device according to any one of claims 1 to 5,
**characterized in that**
the working device (1) is furthermore designed and configured to display at least one determined location (7) in the processing environment (3), which is suitable for data transmission, on a display device for a user as a location (9) for a base station (8) for the working device (1), or to provide at least one determined location (7) in the processing environment (3) on the radio interface (2) for a display on a display device, in particular **in that** the display or the provision for display takes place when the radio network (4) at a current location of the base station (8) has a signal characteristic which reaches a predetermined threshold value.

7. Working device (1) according to any one of claims 1 to 6,
**characterized in that**
the at least one signal characteristic is a signal strength and/or a frequency and/or a signal attenuation and/or a data transmission rate and/or a transmission technology.

8. Working device (1) according to any one of claims 1 to 7,
**characterized in that**
the working device (1) has at least one activation means (11) for manual activation of a mapping run in the processing environment (3) by a user, and **in that** the mapping run includes the detection of at least one signal characteristic of at least one radio network (4) at different locations in the processing environment (3).

9. Method (100) for operating a working device (1) according to one of claims 1 to 8, wherein the working device (1) has at least one radio interface (2) for data transmission, and wherein the working device (1) is at least designed and configured to move autonomously in a processing environment (3), wherein in the processing environment (3) a radio network (4) suitable for data transmission does not have sufficient signal strength for a data connection in all areas of the processing environment (3), wherein at least the following method step is included:
- processing (101) signal position data (12), the signal position data (12) representing at least one signal characteristic of at least one radio network (4) suitable for data transmission at different locations in the processing environment (3),
**characterized in that**
at least the following process step is also included:
- determining (102) at least one location (7) in the processing environment (3) suitable for data transmission via the radio network (4) using at least one threshold value relating to the signal characteristic,
causing (103) the working device (1) to move to a location (7) suitable for data transmission when a predetermined event occurs and/or for transmitting - sending or receiving - data of a size exceeding a predetermined threshold value and/or in a time-controlled manner,
**in that** the working device (1) is furthermore designed and configured to be used for carrying out work tasks in processing environments (3) in which the radio network (4) does not have sufficient signal strength for a data connection in all areas of the processing environment (3).

10. Method (100) according to claim 9,
**characterized in that**
at least the following process step is included:
- Display (107) of at least one location (7), which is suitable for data transmission via the radio network (4), on a display device for a user as a location (9) for a base station (8) for the working device (1), in particular if, at a current location of the base station (8), the radio network (4) has at least one signal characteristic which reaches a predetermined threshold value.

11. Method (100) according to claim 9 or 10,
**characterized in that**
furthermore at least the following process steps is further comprised:
- maintaining (108) data intended for transmission via the radio interface (2) over the radio network (4) until a location (7) suitable for data transmission is reached when the working device (1) is moved in the processing environment (3) to perform work tasks.

12. Method (100) according to any one of claims 9 to 11,
**characterized in that**
a staying (104) of the working device (1) at a location (7) suitable for data transmission takes place until a data transmission is completed and/or that a movement (105) for completing work tasks takes place during the data transmission as long as at least one current threshold value of at least one signal characteristic is reached.

13. System, comprising at least one working device (1) according to one of claims 1 to 8 and at least one data processing device (13), wherein the data processing device (13) is designed and configured to determine at least one location (7) in the processing environment (3) suitable for data transmission via the radio network (4) using at least one threshold value in relation to received signal position data (12) and, in particular, to transmit data relating to the location (7) to the working device (1).

## Revendications

1. Appareil de travail (1) avec au moins une interface radio (2) pour la transmission de données, l'appareil de travail (1) étant conçu et configuré au moins pour se déplacer de manière autonome dans un environnement de traitement (3) et pour détecter au moins une caractéristique de signal d'au moins un réseau radio (4) approprié pour une transmission de données à différents endroits dans l'environnement de traitement (3) et pour générer des données de position de signal (12) par combinaison avec les données de position de l'endroit respectif, l'appareil de travail (1) étant en outre conçu et configuré pour déterminer, en utilisant au moins une valeur seuil relative à la caractéristique du signal, au moins un endroit (7) approprié pour une transmission de données par le réseau radio dans l'environnement de traitement (3) et/ou de mettre à disposition les données de position de signal (12) pour déterminer au moins un endroit (7) approprié pour une transmission de données par le réseau radio (4) dans l'environnement de traitement (3) en utilisant au moins une valeur seuil relative à la caractéristique du signal par un dispositif de traitement de données (13) sur l'interface radio (2) et de recevoir des données relatives à au moins un edroit déterminé (7),
**caractérisé en ce que**
l'appareil de travail (1) est en outre conçu et configuré pour être utilisé pour l'exécution de tâches de travail dans des environnements de traitement (3) dans lesquels le réseau radio (4) ne présente pas dans toutes les zones de l'environnement de traitement (3) une intensité de signal suffisante pour une liaison de données, **en ce que** l'appareil de travail (1) est en outre conçu et configuré pour se déplacer, lors de l'apparition d'un événement prédéterminé et/ou pour la transmission - émission ou réception - de données d'une taille dépassant une valeur seuil prédéterminée et/ou de manière commandée dans le temps, à un endroit (7) approprié pour la transmission de données dans l'environnement de travail (7).

2. Appareil de travail (1) selon la revendication 1,
**caractérisé en ce que**
l'appareil de travail (1) est en outre conçu et configuré pour se déplacer vers un endroit (7) approprié pour la transmission de données lorsqu'un dysfonctionnement se produit.

3. Appareil de travail (1) selon la revendication 1 ou 2,
**caractérisé en ce que**
l'appareil de travail (1) est en outre conçu et configuré pour tenir à disposition des données prévues pour une transmission sur l'interface radio (2) jusqu'à ce qu'un endroit (7) approprié pour une transmission de données soit atteint lors d'un déplacement dans l'environnement de traitement (3) pour l'exécution de tâches de travail.

4. Appareil de travail (1) selon l'une quelconque des revendications 1 à 3,
**caractérisé en ce que**
l'appareil de travail (1) est en outre conçu et configuré pour rester à l'endroit (7) jusqu'à ce qu'une transmission de données soit terminée et/ou pour ralentir un mouvement à l'endroit (7) pour une transmission de données et/ou pour poursuivre un mouvement à l'endroit (7) pendant la transmission de données, par exemple pour l'exécution de tâches de travail, en particulier en fonction d'au moins une valeur seuil pour au moins une caractéristique de signal déterminée actuelle.

5. Appareil de travail (1) selon l'une quelconque des revendications 1 à 4,
**caractérisé en ce que**
l'appareil de travail (1) est en outre conçu et configuré pour répéter la saisie d'au moins une caractéristique de signal à différents endroits et la combinaison avec des données de position de signal (12), afin d'actualiser et/ou de compléter les données de position de signal (12), en particulier de les répéter en fonction du temps et/ou en fonction de l'événement.

6. Appareil de travail selon l'une quelconque des revendications 1 à 5,
**caractérisé en ce que**
l'appareil de travail (1) est en outre conçu et configuré pour afficher au moins un endroit (7) déterminé dans l'environnement de traitement (3), approprié pour une transmission de données sur un dispositif d'affichage pour un utilisateur en tant qu'emplacement (9) pour une station de base (8) pour l'appareil de travail (1)
ou pour mettre à disposition au moins un endroit (7) déterminé dans l'environnement de traitement (3) approprié pour une transmission de données sur l'interface radio pour un affichage sur un dispositif d'affichage, en particulier **en ce que** l'affichage ou la mise à disposition pour l'affichage a lieu lorsque le réseau radio (4) présente à un lieu actuel de la station de base (8) une caractéristique de signal qui atteint une valeur seuil prédéterminée.

7. Appareil de travail (1) selon l'une quelconque des revendications 1 à 6,
**caractérisé en ce que**
ladite au moins une caractéristique de signal est une intensité de signal et/ou une fréquence et/ou une atténuation de signal et/ou un taux de transmission de données et/ou une technologie de transmission.

8. Appareil de travail (1) selon l'une quelconque des revendications 1 à 7,
**caractérisé en ce que**
l'appareil de travail (1) présente au moins un moyen d'activation (11) pour l'activation manuelle d'un trajet de cartographie dans l'environnement de traitement (3) par un utilisateur, et **en ce que** le trajet de cartographie comprend la détection d'au moins une caractéristique de signal d'au moins un réseau radio (4) à différents endroits dans l'environnement de traitement (3).

9. Procédé (100) de fonctionnement d'un appareil de travail (1), selon l'une des revendications 1 à 8, dans lequel l'appareil de travail (1) présente au moins une interface radio (2) pour la transmission de données, et dans lequel l'appareil de travail (1) est conçu et configuré au moins pour se déplacer de manière autonome dans un environnement de traitement (3), dans lequel, dans l'environnement de traitement (3), un réseau radio (4) approprié pour la transmission de données ne présente pas dans toutes les zones de l'environnement de traitement (3) une intensité de signal suffisante pour une liaison de données, au moins l'étape de procédé suivante étant comprise :
- traitement (101) de données de position de signal (12), les données de position de signal (12) représentant au moins une caractéristique de signal d'au moins un réseau radio (4) approprié pour la transmission de données à différents endroits dans l'environnement de traitement (3),
**caractérisé en ce que**
en outre, au moins l'étape de procédé suivante est comprise :
- déterminer (102) au moins un endroit (7) dans l'environnement de traitement (3) approprié pour une transmission de données via le réseau radio (4) en utilisant au moins une valeur de seuil concernant la caractéristique de signal,
- amener (103) l'appareil de travail (1) à se déplacer vers un endroit (7) approprié pour la transmission de données lors de l'apparition d'un événement prédéterminé et/ou pour la transmission - émission ou réception - de données d'une grandeur dépassant une valeur de seuil prédéterminée et/ou de manière commandée dans le temps,
**en ce que** l'appareil de travail (1) est en outre conçu et configuré pour être utilisé pour l'exécution de tâches de travail dans des environnements de traitement (3) dans lesquels le réseau radio (4) ne présente pas une intensité de signal suffisante pour une liaison de données dans toutes les zones de l'environnement de traitement (3).

10. Procédé (100) selon la revendication 9,
**caractérisé en ce que**
en outre, au moins l'étape de procédé suivante est comprise :
- affichage (107) d'au moins un endroit (7), qui est approprié pour une transmission de données via le réseau radio (4), sur un dispositif d'affichage pour un utilisateur en tant qu'emplacement (9) pour une station de base (8) pour l'appareil de travail (1), en particulier si, à un lieu actuel de la station de base (8), le réseau radio (4) présente au moins une caractéristique de signal qui atteint une valeur seuil prédéterm inée.

11. Procédé (100) selon la revendication 9 ou 10,
**caractérisé en ce que**
comprend en outre au moins les étapes de procédé suivantes :
- la mise à disposition (108) de données prévues pour la transmission par l'interface radio (2) via le réseau radio (4), jusqu'à ce qu'un endroit (7) approprié pour la transmission de données soit atteint lors d'un déplacement de l'appareil de travail (1) dans l'environnement de traitement (3) pour l'exécution de tâches de travail.

12. Procédé (100) selon l'une quelconque des revendications 9 à 11,
**caractérisé en ce que**
un maintien (104) de l'appareil de travail (1) à un endroit (7) approprié pour la transmission de données a lieu jusqu'à ce qu'une transmission de données soit terminée et/ou **en ce qu'**un déplacement (105) pour l'exécution de tâches de travail a lieu pendant la transmission de données tant qu'au moins une valeur seuil actuelle d'au moins une caractéristique de signal est atteinte.

13. Système présentant au moins un appareil de travail (1) selon l'une des revendications 1 à 8 et au moins un dispositif de traitement de données (13), le dispositif de traitement de données (13) étant conçu et configuré pour déterminer, en utilisant au moins une valeur seuil par rapport à des données de position de signal (12) reçues, au moins un lieu (7) dans l'environnement d'usinage (3) approprié pour une transmission de données via le réseau radio (4) et pour transmettre en particulier des données concernant le lieu (7) à l'appareil de travail (1).
